# FASCICULE DE BREVET EUROPEEN

(11) **EP 1 676 777 B1**
(45) Date de publication et mention de la délivrance du brevet: **08.07.2009**
(21) Numéro de dépôt: 04293179.0
(22) Date de dépôt: 31.12.2004
(51) Int. Cl.: B64G 1/40, B64G 1/24

(54) **Satellite pourvu de moyens pour contrer la pression solaire**
Satellit mit Mitteln gegen den Sonnendruck
Satellite equipped with means for countering the solar pressure

(43) Date de publication de la demande: 05.07.2006
(73) Titulaire: Thales, 92200 Neuilly-sur-Seine (FR)
(72) Inventeur: Leyre, Xavier, 06650 Opio (FR)
(74) Mandataire: Esselin, Sophie

(56) Documents cités:
- EP-A- 0 919 463
- US-A- 5 305 971
- US-A- 5 806 801
- US-A1- 2004 140 402
- US-B1- 6 481 671
- WILLIAMS T, WANG Z-S: "Solar radiation pressure and formation-keeping in highly elliptical orbits" AIAA ASTRODYNAMICS SPECIALIST CONFERENCE, vol. 1, 5 octobre 2002 (2002-10-05), - 8 octobre 2002 (2002-10-08) XP008044299
- WILLIAMS T, WANG Z-S: "Uses of solar radiation pressure for satellite formation flight" INTERNATIONAL JOURNAL OF ROBUST AND NONLINEAR CONTROL, no. 12, 2002, pages 163-183, XP002320333
- DEININGER W D ET AL: "Formation flying activities and capabilities at Ball Aerospace" AEROSPACE CONFERENCE, 2003. PROCEEDINGS. 2003 IEEE MARCH 8-15, 2003, PISCATAWAY, NJ, USA,IEEE, vol. 6, 8 mars 2003 (2003-03-08), pages 62599-62614, XP010660555 ISBN: 0-7803-7651-X
- VAILLON L, LAGADEC K, LEBAS J: "Precision formation flying design for the SMART-2 and SMART-3 technology demonstration missions" THIRD INTERNATIONAL WORKSHOP ON SATELLITE CONSTELLATIONS AND FORMATION FLYING, [Online] 24 février 2003 (2003-02-24), pages 91-99, XP002320334 PISA, IT Extrait de l'Internet: URL:http://www.iafastro.com/seminars/proce edings%20Pisa/Vaillon.pdf> [extrait le 2005-03-07]

## Description

La présente invention concerne le domaine spatial et, plus particulièrement, un ou plusieurs engins spatiaux aptes à effectuer un contrôle par voile solaire de la pression solaire qu'ils subissent.

Il est connu, dans l'état de la technique, des études pour satellites destinés à des vols en formation pour la détection de planètes extra-solaires. Ces vols en formation nécessitent plusieurs satellites (typiquement 6) avec des exigences de positionnement relatifs extrêmement serrées. D'autres types de constellations sont envisagés dans le domaine de l'astronomie pour effectuer de l'imagerie par synthèse d'ouverture, en simulant un miroir dont les dimensions maximales correspondent à la distance maximale entre deux satellites (typiquement de l'ordre de plusieurs centaines de mètres). De telles dimensions ne sont évidemment pas compatibles avec les diamètres disponibles sous coiffe des lanceurs actuels (typiquement quelques mètres) et apportent ainsi un bond technologique majeur. L'orbite pour ce type d'application est généralement choisie parmi les points de Lagrange (L2 typiquement) pour le caractère extrêmement stable des conditions qui y règnent (thermique, gravitationnel, radiations) permettant d'implanter des charges utiles très sensibles et refroidie. Ceci implique au niveau des performances du vol en formation des précisions et des stabilités micrométriques voire nanométriques et ceci sur des périodes de temps relativement longues (pouvant aller jusqu'à quelques jours).

En effet, le contrôle du vol en formation et le déploiement de structures complexes en orbite doit pouvoir fournir des moyens de propulsion (actionneurs) inter-satellites très précis (quelques micro-newtons à quelques milli-newtons) tout en minimisant les contraintes d'accommodations (non-obstruction de champs de vue, plumes, masse, non pollution des optiques, fiabilité, etc.). Sur des orbites de type points de Lagrange ou suffisamment éloignées de la terre (typiquement supérieures à 100 000 km), les forces et couples perturbateurs prépondérants sont dus à la pression solaire différentielle entre les satellites de la constellation ainsi que les couples générés sur chaque satellite. Cette contrainte peut également être valable dans le cas d'un satellite unique dans des conditions similaires.

Pour satisfaire les besoins cités ci-dessus, la constellation doit comprendre un certain nombre de satellites, des sous-systèmes de métrologie très précis et des sous-systèmes de propulsion extrêmement précis et à bruit très réduit pour contrer cette pression solaire.

Les concepts classiquement retenus pour répondre à ce type de besoins sont basés sur n satellites identiques et autonomes, dont la propulsion est basée sur un système de tuyères réparties sur toute la constellation. Le type de tuyère utilisé s'étend de la gamme standard chimique aux tuyères ioniques ou celles dites FEEPs (de l'anglais "Field Electrical Effect Propulsion"), cette dernière technique utilisant l'application de hautes tensions sur des molécules de Césium ou Indium pour générer une très grande vitesse permettant ainsi de propulser l'engin.

Cependant, les systèmes de contrôle de propulsion par tuyères souffrent d'un certain nombre de problèmes, notamment de la pollution des optiques, du bruit et du défaut de précision des tuyères, de génération de plumes, d'accommodations sur le satellite et de masse accrue par la présence des tuyères.

Par ailleurs, les systèmes de contrôle de propulsion par bobines et roues souffrent de problèmes complémentaires, notamment de microvibration des roues, de bruit engendré par les roues lors des phases opérationnelles, de durée de vie des roues, de correction inertielle impossible à effectuer en fonction de la distance inter-satellite de la constellation.

Un satellite destiné à voyager, parmi une constellation de satellites, dans une portion de l'espace où les forces et couples perturbateurs prépondérants sont majoritairement dus à la pression solaire différentielle entre lesdits satellites de la constellation peut être apte à contrôler son attitude, lors du vol en formation, sans tuyère ni roue et de manière très précise en minimisant les bruits induits.

US 2004/0140402 A1 est considéré comme l'art antérieur le plus proche.

Etant donné que les forces et couples perturbateurs sur des orbites de type points de Lagrange ou équivalent sont majoritairement (plusieurs ordres de grandeur) dus à la pression solaire, l'idée est de contrer cette force solaire à son origine : par le contrôle de la réflectivité des surfaces réfléchissantes.

En ce qui concerne les satellites en vol en formation, il faut, pour contrôler des satellites en vol en formation, ajuster les forces différentielles s'exerçant entre les satellites.

A cet effet, l'invention a pour object des satellites tels que revendiqués à la revendication 1.

Donc, selon ce mode de réalisation de satellite au sein d'une constellation de satellites en vol en formation, la force prédominante étant la pression solaire, les moyens d'ajustement de la réflectivité des surfaces réfléchissantes du bouclier solaire procèdent de manière à égaliser le rapport Pression solaire/Masse satellite (S/M) pour chacun des satellites. Une fois cette égalisation faite, aucun contrôle n'est plus nécessaire, et les forces différentielles perturbatrices résiduelles sont plusieurs ordres de grandeurs inférieures (typiquement < 0.1 microN) permettant de laisser dériver le satellite pendant la prise de vue.

Les principaux avantages résident dans la suppression des pollutions des optiques générées par les tuyères, la suppression des bruits des roues, l'utilisation des tuyères chimiques classiques (déjà présentes pour la mise à poste) pour la correction d'orbite seulement et non pas lors du contrôle opérationnel de la formation en vol, l'insensibilité vis-à-vis de la distance inter-satellite particulièrement pour des missions de type astronomiques en L2 où les distances inter-satellites peuvent aller jusqu'au kilomètre.

Selon un mode de réalisation, pour compenser les couples perturbateurs prépondérants dus à la pression solaire différentielle entre lesdits satellites de la constellation, les surfaces réfléchissantes dont la réflectivité est ajustée par lesdits moyens d'ajustement sont agencées symétriquement par rapport au centre de poussée du satellite, de manière à pouvoir effectuer un contrôle selon les trois axes du satellite.

Selon un mode de réalisation, les moyens d'ajustement de la réflectivité des surfaces réfléchissantes du bouclier solaire en fonction de l'angle d'incidence des rayons solaires consistent en des croix de Malte.

Selon un mode de réalisation, les moyens d'ajustement de la réflectivité des surfaces réfléchissantes du bouclier solaire en fonction de l'angle d'incidence des rayons solaires consistent en des films à réflectivité variable dont la variabilité est contrôlé électriquement.

D'autres caractéristiques et avantages de l'invention apparaîtront à l'examen de la description détaillée ci-après, et des dessins annexés, sur lesquels :
- la figure 1 représente un exemple d'application dans laquelle l'invention pourrait être mise en oeuvre,
- la figure 2 représente, de façon schématique, un mode de réalisation d'un satellite selon l'invention et une vue faisant face au soleil.

Dans la suite, les éléments remplissant des fonctions identiques ou similaires porteront les mêmes références.

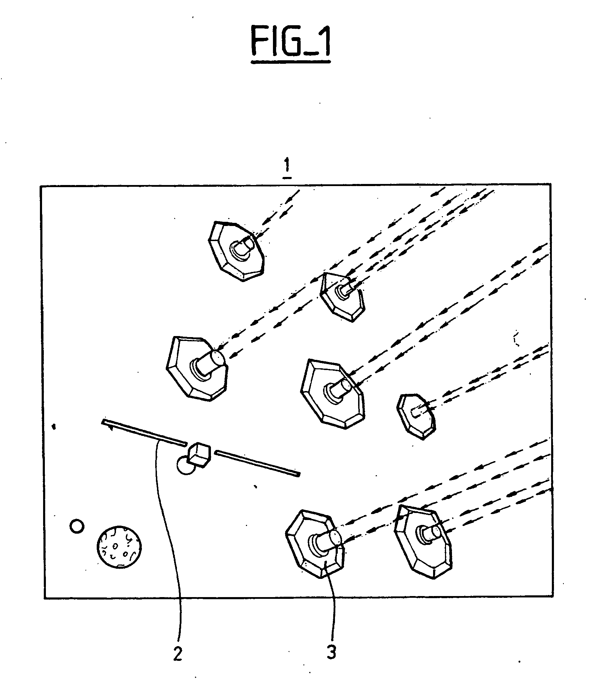

La figure 1 représente une constellation 1 comprenant un satellite principal 2 et des satellites secondaires 3.

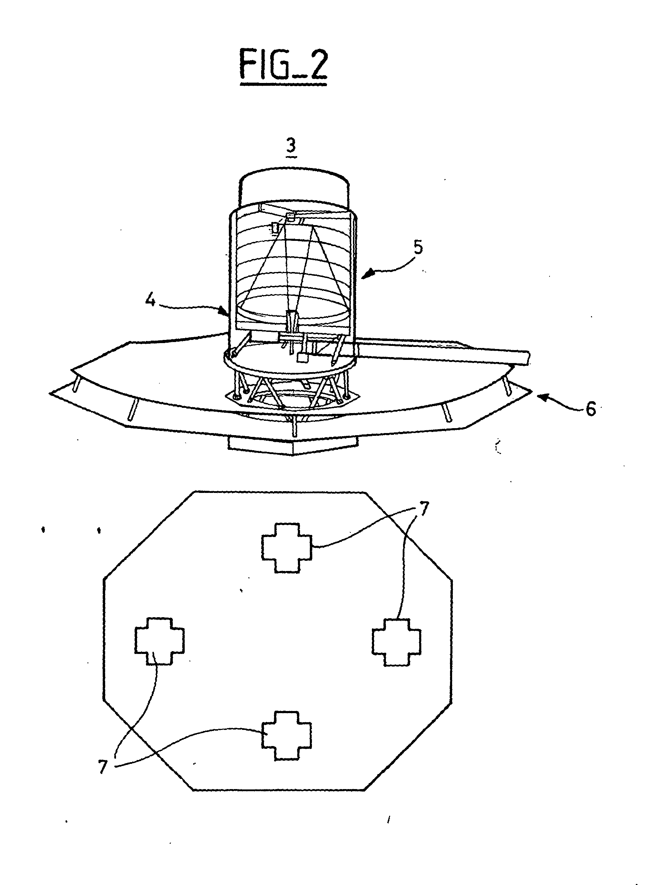

Dans la suite, on se référera également à la figure 2 illustrant, de façon schématique, le satellite 3.

L'exemple d'application choisi pour la description de l'invention est la flotte "Darwin" issue du projet de l'Agence Spatiale Européenne portant le même nom. On peut y distinguer d'une part le satellite principal 2 qui porte l'"intelligence" de la constellation (d'où sa dénomination de "hub" en anglais) et d'autre part n satellites identiques (n=6 sur la figure 1), pointant inertiellement dans une direction fixe pendant une durée assez longue, typiquement de quelques jours.

Le satellite 3 comporte, sur la face opposée à la réception des rayons solaires, une charge utile 4 qui peut se réduire à un miroir plan (mais qui pourrait avoir une forme quelconque) monté dans une structure 5 simple, recouverte de cellules solaires (non illustrées). Par ailleurs, sur la face recevant les rayons solaires, le satellite comprend un bouclier solaire 6.

L'intérieur de la structure 5 est réduite au strict minimum, à savoir notamment un viseur d'étoiles, non représenté (en anglais "startracker").

L'orbite type (point de Lagrange) L2 a, dans la mission "Darwin", comme force perturbatrice principale la force de pression solaire d'une valeur d'environ 5 microN/m2. En considérant grossièrement des boucliers solaires de 100m2, et une dispersion de fabrication de 2% sur chacun, une force différentielle inter-satellite de l'ordre de 20 microN va s'appliquer.

Selon un premier mode de réalisation illustré sur la figure 2, les boucliers comportent des croix de Malte 7 connues en soi.

Selon une variante astucieuse (non représentée), les boucliers comportent un film à réflectivité variable dont la variabilité est contrôlé électriquement, ce type de film étant connu en soi.

Les croix de Malte 7, ou le film à réflectivité variable, sont agencés et déterminés de manière à faire varier la réflectivité de 0.3 à 0.8, une surface sur chaque satellite de l'ordre de 4 à 5 m2 par satellite étant alors largement suffisante pour contrer la force solaire. Les forces résiduelles de type pression Infra-Rouge, peuvent, elles aussi, être annulées de la même manière.

Il ne restera plus alors que des forces de type résiduels magnétiques et pression RF, impliquant des résiduels inférieurs à 0.1 microN, pouvant être contrôlées directement par des émissions RF dédiées si nécessaire, ou tout simplement ignorés.

Concernant les couples correspondant aux pressions solaires, il est nécessaire de séparer les couples suivant les différents axes. Considérons tout d'abord les couples sur les axes perpendiculaires à la normale au bouclier 6, en plaçant les surfaces 7 à réflectivité variable symétriquement en quatre points par rapport au centre de poussée du bouclier. Il est évident que ces deux axes sont contrôlables directement. Concernant le troisième axe qualifiable d'axe de rotation du bouclier (perpendiculaire au plan du bouclier), il faut replier d'un certain angle l'extrémité du bouclier de façon différentielle entre les extrémités de façon à lui faire jouer le rôle d'un « moulin à vent solaire », en jouant sur la variation de réflectivité de ses extrémités on peut régler ou annuler l'effet moulin à vent solaire. Il faut, de plus, rappeler que, sur cet axe, les couples engendrés par la pression solaire sont très faibles.

## Revendications

1. Satellites(3) destinés à voyager, parmi une constellation de satellites (2, 3), dans une portion de l'espace où les forces et couples perturbateurs prépondérants sont majoritairement dus à la pression solaire différentielle entre lesdits satellites de la constellation, parmi lequels au moins un satellite (3) comprend une structure (5) de satellite et un bouclier solaire (6) apte à éviter qu'au moins une partie de la structure de satellite ne soit éclairé par les rayons solaires au moyen de surfaces réfléchissantes, le satellite (3) comportant des moyens (7) d'ajustement de la réflectivité des surfaces réfléchissantes du bouclier solaire en fonction de l'angle d'incidence des rayons solaires **caractérisé en ce que** les moyens d'ajustement de la réflectivité des surfaces réfléchissantes du bouclier solaire procèdent de manière à égaliser le rapport Pression solaire/Masse satellite (S/M) pour chacun des satellites.

2. Satellites selon la revendication 1, **caractérisé en ce que** les surfaces réfléchissantes dont la réflectivité est ajustée par lesdits moyens d'ajustement sont agencées symétriquement par rapport au centre de poussée du satellite, de manière à pouvoir effectuer un contrôle selon les trois axes du satellite.

3. Satellites selon l'une des revendications 1 ou 2, **caractérisé en ce que** les moyens d'ajustement de la réflectivité des surfaces réfléchissantes du bouclier solaire en fonction de l'angle d'incidence des rayons solaires consistent en des croix de Malte (7).

4. Satellites selon l'une des revendications 1 ou 2, **caractérisé en ce que** les moyens d'ajustement de la réflectivité des surfaces réfléchissantes du bouclier solaire en fonction de l'angle d'incidence des rayons solaires consistent en des films à réflectivité variable dont la variabilité est contrôlé électriquement.

## Claims

1. Satellites (3) intended to travel in a constellation of satellites (2, 3) in an area of space in which the dominant disturbing forces and torques are for the most part caused by differential solar pressure between said satellites of said constellation, among which at least one satellite (3) comprises a satellite structure (5), a sunshield (6) having reflective surfaces and adapted to prevent at least a portion of said satellite structure from being illuminated by solar rays, and means (7) for adjusting the reflectivity of said reflective surfaces of said sunshield as a function of the angle of incidence of said solar rays, **characterized in that** said means for adjusting the reflectivity of said reflective surfaces of said sunshield equalize the solar pressure/satellite mass ratio (S/M) for each satellite.

2. Satellites according to Claim 1, **characterized in that** said reflective surfaces the reflectivity whereof is adjusted by said adjustment means are arranged symmetrically with respect to the center of thrust of said satellite to enable control about three axes of said satellite.

3. Satellites according to either of Claims 1 and 2, **characterized in that** said means for adjusting the reflectivity of said reflective surfaces of said sunshield as a function of said angle of incidence of said solar rays consist in Maltese crosses (7).

4. Satellites according to either of Claims 1 and 2, **characterized in that** said means for adjusting the reflectivity of said reflective surfaces of said sunshield as a function of said angle of incidence of said solar rays consist in variable reflectivity films the variation whereof is controlled electrically.

## Patentansprüche

1. Satelliten (3), die dazu bestimmt sind, unter einer Konstellation von Satelliten (2, 3) in einem Abschnitt des Raums zu reisen, in dem die vorherrschenden störenden Kräfte und Momente in der Hauptsache auf den Sonnendifferenzialdruck zwischen den Satelliten der Konstellation zurückzuführen sind, unter welchen mindestens ein Satellit (3) eine Satellitenstruktur (5) und eine Sonnenabschirmung (6) aufweist, die mittels reflektierender Flächen vermeiden kann, dass mindestens ein Teil der Satellitenstruktur von Sonnenstrahlen beleuchtet wird, wobei der Satellit (3) Mittel (7) zum Anpassen des Reflexionsgrads der reflektierenden Flächen der Sonnenabschirmung in Abhängigkeit von dem Einfallswinkel der Sonnenstrahlen aufweist, **dadurch gekennzeichnet, dass** die Mittel zum Anpassen des Reflexionsgrads der reflektierenden Flächen der Sonnenabschirmung derart vorgehen, dass das Sonnendruck-/Satellitenmassen (S/M) -Verhältnis für jeden der Satelliten ausgeglichen wird.

2. Satelliten nach Anspruch 1, **dadurch gekennzeichnet, dass** die reflektierenden Flächen, deren Reflexionsgrad von den Mitteln zum Anpassen angepasst ist, in Bezug zu dem Schubzentrum des Satelliten symmetrisch derart angeordnet sind, dass eine Steuerung entlang der drei Achsen des Satelliten ausgeführt werden kann.

3. Satelliten nach einem der Ansprüche 1 oder 2, **dadurch gekennzeichnet, dass** die Anpassungsmittel des Reflexionsgrads der reflektierenden Flächen der Sonnenabschirmung in Abhängigkeit vom Einfallswinkel der Sonnenstrahlen aus Malteserkreuzen (7) bestehen.

4. Satelliten nach einem der Ansprüche 1 oder 2, **dadurch gekennzeichnet, dass** die Mittel zum Anpassen des Reflexionsgrads der reflektierenden Flächen der Sonnenabschirmung in Abhängigkeit von dem Einfallswinkel der Sonnenstrahlen aus Folien mit variablem Reflexionsgrad bestehen, deren Veränderlichkeit elektrisch gesteuert ist.
